# EUROPEAN PATENT SPECIFICATION

(11) **EP 0 494 292 B1**
(45) Date of publication and mention of the grant of the patent: **26.02.1997**
(21) Application number: 91913910.5
(22) Date of filing: 24.07.1991
(51) Int. Cl.: C08L 17/00, C08J 11/10

(54) **THERMOPLASTIC RUBBER OBTENTION METHOD**
VERFAHREN ZUR HERSTELLUNG EINES THERMOPLASTISCHEN KAUTSCHUKS
PROCEDE D'OBTENTION DE CAOUTCHOUC THERMOPLASTIQUE

(30) Priority: 26.07.1990 BR 9003627
(43) Date of publication of application: 15.07.1992
(73) Proprietor: OLIVEIRA DA CUNHA LIMA, Luiz Carlos, 22460 Rio de Janeiro (BR)
(72) Inventor: OLIVEIRA DA CUNHA LIMA, Luiz Carlos, 22460 Rio de Janeiro (BR)
(74) Representative: Kiliaridis, Constantin
(86) International application number: PCT/BR91/00015
(87) International publication number: WO 92/01745

(56) References cited:
- US-A- 4 257 925
- US-A- 4 400 488

## Description

The present invention is related to a process for the production of a thermoplastic rubber from vulcanised rubber. The starting materials for this process are typically vulcanised rubber such as low vulcanised rubber, and a thermoplastic resin.

Thermoplastic rubber is already known since the last century under the names of gutta-percha, balata and chicle. These rubbers contain *trans*-1,4-polyisoprene, obtained from the latex of sapotaceae plants, and are different from natural rubber which contains *cis*-1,4-polyisoprene. Gutta-percha is a hard product having low elongation, low water permeability and high dielectric resistance. It has been used for many years in the coating of electric cables such as submarine cables, for golf balls, heat-sealing adhesives, chewing gums and varnishes, along with various applications in dental treatment.

With the development of the synthetic polymers, the *trans*-polyisoprene and the *trans*-polybutadiene have appeared which show characteristics approaching those of the natural polymers.

These polymers can be vulcanised, yielding a product which is more or less crystalline and which keeps deformations at ambient temperature and recover by heating. They are reinforced with carbon black, acquiring excellent abrasion resistance and are used in heels, shoe soles, pavements, gaskets, sponges, golf balls, battery cases etc. New kinds of polymers have also been developed, presently no longer in the *trans*-1,4 form, such as by-products of polyurethanes, polyesters, styrenics and olefinics. The most widely used are the styrenic thermoplastic rubbers, followed by the olefinics and the polyesters. The polyurethanes are only used in very rare and specific cases due to their high cost.

The main use of thermoplastic rubbers is in the manufacture of heels and soles, winning back a large portion of the market that has been lost to these articles made of polyvinyl chloride (PVC). As it is commonly known, the processing of plastic materials is much more economical than that of conventional rubber since it is not necessary to vulcanise plastic materials, and the process burrs may be reused, having the same characteristics as the original products. The rubber, in its natural state, is composed of different materials which are blended, homogenised, allowed to stand for 24 hours, pre-moulded, vulcanised and, finally, burred. The burrs and vulcanisation left-overs are not readily reusable, and they have to be reclaimed. Vulcanisation transforms the rubber blend from a plastic state into an elastic state which does not return into the plastic state by mere heating as in the case of plastic materials unless they are cured. These materials must first be uncured, a process similar to devulcanisation.

The main feature of the thermoplastic rubber, after blending, is that it can be processed to the final product without the need to vulcanise it, and left-over and burrs may thus be returned to the starting stage of the process.

Although there are many kinds of thermoplastic rubbers which are used in industry, the cost factor produces some restrictions to their use, chiefly because of the difficulties that thermoplastics show on being blended with pigments that would maintain or enhance their characteristics.

The document US-A-4,400,488 discloses inter alia the addition of a thermoplastic polymer to a vulcanisable matter such as elastomers and/or reclaimed rubber. However, what is obtained is not a thermoplastic rubber but a green elastomer; the added thermoplastics are vulcanised together with the composition to give vulcanised elastomeric products.

The objective of the present invention was to develop a simple method for the manufacture of a thermoplastic rubber which fulfils not only the product quality requirements but also the economical ones in producing it from a plentiful and unproblematic raw material which are the already vulcanised rubber artefacts such as tyres, left-overs and surplus pre-vulcanised mouldings.

According to the process of the present invention, the vulcanised rubber, used as a starting material, is first swollen in contact with a solvent selected from toluene and trichloroethylene and then ground in the presence of this solvent in a manganese steel mill and the milled product is dried, and this product is then heated together with a thermoplastic resin and blended with the molten thermoplastic resin.

The starting material, namely the already vulcanised rubber artefact, undergoes a physical, chemical or physico-chemical devulcanisation process that transforms it into a regular and uniform batch known as regenerated rubber, reclaimed rubber, or devulcanised rubber "masterbatch". This devulcanised rubber is heated to the melting point of the thermoplastic resin and blended with it. The batch thus obtained is preferably homogenised. Its crosslinking degree may be adjusted by a vulcanising agent. The product may then be cut into small pieces by a pelletisation process. It can then be reprocessed like a normal thermoplastic material.

The present process can be carried out in two different ways: 1) putting all products together into the mill, or 2) putting them into the mill separately. None of both variants will substantially alter the end product, the choice depending only on the criteria and facilities of the operator.

As already mentioned before, the process comprises the blending of the devulcanised rubber with a thermoplastic resin which may be a polyparaffine or a polyvinyl chloride or any other thermoplastic resin. Preferably, the blend is made from 5 to 95 % by weight of devulcanised rubber, referred to the thermoplastic resin. It is possible to add further substances to be selected in function of the final application characteristics; examples of such substances are resins, vulcanisers, oils, accelerators, retarders, pigments, dyestuffs and dispersants.

The following describes examples of compositions obtained by the present process.

### Example 1 (not within the scope as claimed)

About 200 g of polypropylene were put into an open blender heated to about 180 °C. The temperature was adjusted in such a way that the polypropylene was totally molten and adhered to the roll. About 200 g of devulcanised tire rubber, previously heated and laminated with a dispersing product, were added little by little. After all rubber had been added to the batch, it was homogenised, cut into strips and pelletised.

The product was left to rest for about 24 hours and then injected into a test mould, and the characteristics of the moulded product were determined:

| | |
|---|---|
| Density | 1.013 g/cm³ |
| Hardness | 85 Shore A |
| Tear strength | 10.8 MPa (110 kg/cm²) |
| Elongation | 300 % |
| Wear | 400 cm³ |
| Flexion | > 5000 N |

### Example 2

200 g of pure rubber, already vulcanised, 1200 g of toluene and 200 g of high density polyethylene were charged into a manganese steel ball mill. The batch was allowed to swell for 24 hours, and thereafter the grinding was started. The product was removed from the mill after 48 hours and dried. The product was put into a roll blender previously heated to 180 °C, i.e. the melting point of the high density polyethylene, and integrally blended. Thereafter, the batch was homogenised with the addition of a dispersing agent, and the crosslinking degree was adjusted with a curing agent.

The product, after a rest during 24 hours, was injected into a test mould, and its characteristics were determined:

| | |
|---|---|
| Density | 0.92 g/cm³ |
| Hardness | 60 Shore A |
| Tear strength | 9.6 MPa (98 kg/cm²) |
| Elongation | 400 % |
| Wear | 580 cm³ |
| Flexion | > 2000 N |

### Example 3

200 g of pre-vulcanised rubber and 2 g of benzoic acid were charged into an open blender, and the batch was homogenised. The product was cut into small pieces and put into a manganese steel ball mill along with 1200 g of trichloroethylene and 200 g of PVC. The batch was allowed to swell for 12 hours, and then the grinding was started. 48 hours later, the batch was removed from the ball mill and dried. The product was put into a cylinder blender, pre-heated to the melting point of the PVC, homogenised together with a dispersing agent, the crosslinking degree was adjusted, and the product was cut into stripes and then pelletised and allowed to rest for 24 hours. It was then injected into a test mould, and its characteristics were determined:

| | |
|---|---|
| Density | 1.030 g/cm³ |
| Hardness | 61 Shore A |
| Tear strength | 11.9 MPa (121.5 kg/cm²) |
| Elongation | 432 % |
| Wear | 422 cm³ |
| Flexion | > 3000 N |

## Claims

1. A process for the manufacture of a thermoplastic rubber from vulcanised rubber, wherein the rubber is swollen in contact with a solvent selected from toluene and trichloroethylene and then ground in the presence of this solvent in a manganese steel mill and the milled product is dried, and then heated together with a thermoplastic resin and blended with the molten thermoplastic resin.

2. The process of claim 1, wherein the thermoplastic resin is added to the vulcanised rubber already before the swelling step, and the blend obtained in the final mixing step is further homogenised with an added dispersing agent and a curing agent.

3. The process of claim 1, wherein the milled, dried rubber is heated to the melting point of the thermoplastic resin and blended with it, and the blend is then mixed with dispersing agents, resins, pigments, and afterwards pelletised.

4. The process of claim 1, wherein the crosslinking degree of the thermoplastic rubber to be produced is adjusted by the addition of a vulcanising agent.

5. The process of claim 1, wherein the blend is made from 5 to 95% by weight of devulcanised rubber, referred to the thermoplastic resin.

6. The process of claim 1, wherein used vulcanised rubber articles are used as the rubber starting material.

## Patentansprüche

1. Verfahren zur Herstellung eines thermoplastischen Kautschuks aus Vulkanisat, wobei der Kautschuk in Kontakt mit einem Lösungsmittel, ausgewählt unter den Lösungsmitteln Toluol und Trichloräthylen, zum Schwellen gebracht und dann in Gegenwart dieses Lösungsmittels in einer Manganstahlmühle gemahlen und das gemahlene Produkt getrocknet wird, und danach mit einem thermoplastischen Harz zusammen erhitzt und mit dem geschmolzenen thermoplastischen Harz gemischt wird.

2. Verfahren nach Anspruch 1, wobei das thermoplastische Harz dem Vulkanisat bereits vor dem Schwellungsschritt zugegeben und die erhaltene Mischung in einem abschliessenden Mischungsschritt weiter mit einem zugegebenen Dispersionsmittel und einem Aushärtungsmittel homogenisiert wird.

3. Verfahren nach Anspruch 1, wobei der gemahlene und getrocknete Kautschuk bis zum Schmelzpunkt des thermoplastischen Harzes erhitzt und mit ihm gemischt wird und die Mischung dann mit Dispergierungsmitteln, Harzen und Pigmenten gemischt und danach pelletisiert wird.

4. Verfahren nach Anspruch 1, wobei der Vernetzungsgrad des herzustellenden thermoplastischen Kautschuks durch Zufügen eines Vulkanisierungsmittels eingestellt wird.

5. Verfahren nach Anspruch 1, wobei die Mischung aus 5 bis 95 Gewichts-% an entvulkanisiertem Kautschuk, bezogen auf das thermoplastische Harz, hergestellt wird.

6. Verfahren nach Anspruch 1, wobei gebrauchte Vulkanisat-Artikel als Kautschukausgangsmaterial verwendet werden.

## Revendications

1. Procédé pour la production de caoutchouc thermoplastique à partir de caoutchouc vulcanisé, caractérisé par le fait que le caoutchouc est gonflé au contact avec un solvant sélectionné parmi le toluène et trichloroéthylène et que par la suite est broyé en présence de ce solvant dans un broyeur en acier de manganèse et que le produit broyé est séché, et ensuite chauffé avec une résine thermoplastique et mélangé avec la résine thermoplastique fondue.

2. Procédé selon la revendication 1, caractérisé par le fait que la résine thermoplastique est additionnée dans le caoutchouc vulcanisé avant l'étape de gonflage, et que le mélange obtenu à l'étape finale de mélange est par la suite homogénéisé avec l'addition d'un agent de dispersion et un agent de polymérisation.

3. Procédé selon la revendication 1, caractérisé par le fait que le caoutchouc broyé et séché est chauffé jusqu'au point de fusion de la résine thermoplastique et mixé avec elle, et le mélange est par la suite mixé avec des agents de dispersion, résine, pigments, etc et ensuite mis sous forme de pellets.

4. Procédé selon la revendication 1, caractérisé par le fait que le degré de réticulation du caoutchouc thermoplastique à produire est ajusté par l'addition d'un agent de vulcanisation.

5. Procédé selon la revendication 1, caractérisé par le fait que le mélange est fait de 5 à 95 % du poids par du caoutchouc vulcanisé, par rapport à la résine thermoplastique.

6. Procédé selon la revendication 1, caractérisé par le fait que l'on utilise en tant que matériau de départ pour le caoutchouc des articles usagés en caoutchouc vulcanisé.
